# FASCICULE DE BREVET EUROPEEN

(11) **EP 2 014 779 B1**
(45) Date de publication et mention de la délivrance du brevet: **29.12.2010**
(21) Numéro de dépôt: 08012162.7
(22) Date de dépôt: 04.07.2008
(51) Int. Cl.: C22C 19/03, H01M 4/38, H01M 4/26, C01F 5/00

(54) **Matière active négative pour accumulateur nickel metal hydrure**
Negatives aktives Material für Nickel-Metallhydrid-Akkumulator
Negative active material for hydride metal nickel accumulator

(30) Priorité: 06.07.2007 FR 0704895
(43) Date de publication de la demande: 14.01.2009
(73) Titulaire: Saft Groupe S.A., 93170 Bagnolet (FR)
(72) Inventeur: Lavaud, Celine, 33300 Bordeaux (FR); Dillay, Valerie, 33290 Ludon Medoc (FR); Bernard, Patrick, 33000 Bordeaux (FR)
(74) Mandataire: Hirsch & Associés

(56) Documents cités:
- EP-A- 1 826 283
- EP-A1- 0 806 802
- EP-A1- 1 418 636
- JP-A- 11 246 923
- DATABASE WPI Thomson Scientific, London, GB; AN 2003-141550 XP002453750 & CN 1 375 570 A (UNIV ZHEJIANG) 23 octobre 2002 (2002-10-23) & CN 1 375 570 A (UNIV ZHEJIANG [CN]) 23 octobre 2002 (2002-10-23)

## Description

### DOMAINE TECHNIQUE

Le domaine technique de l'invention est celui des accumulateurs nickel-métal hydrure (NiMH) possédant une autodécharge réduite.

### ETAT DE LA TECHNIQUE

Un accumulateur NiMH comprend typiquement au moins une électrode positive (cathode) comprenant une matière active principalement constituée d'hydroxyde de nickel Ni(OH)₂, au moins une électrode négative (anode) constituée principalement d'un métal capable d'insérer réversiblement de l'hydrogène pour former un hydrure. L'électrode positive est séparée de l'électrode négative par un séparateur qui est généralement constitué de polyoléfine ou de polyamide. Le faisceau électrochimique constitué par l'ensemble des électrodes positives et négatives et des séparateurs est imprégné d'un électrolyte qui est généralement une solution de base forte telle que NaOH, LiOH ou KOH.

Un inconvénient de l'accumulateur NiMH est son autodécharge élevée. L'autodécharge correspond à une baisse de l'état de charge de l'accumulateur alors que celui-ci est simplement stocké, et ne débite aucun courant à travers un dispositif consommateur de courant. Une des causes de l'autodécharge élevée est l'existence d'espèces électrochimiques actives dans l'électrolyte faisant des « navettes » entre l'électrode positive et l'électrode négative (« redox shuttle »). Des impuretés contenant de l'azote sont à l'origine de l'existence de ces navettes électrochimiques. Ces impuretés sont oxydées à l'électrode positive chargée pour former des ions nitrate ou des ions nitrite. Les ions nitrate (ou nitrite) migrent ensuite à travers le séparateur et se réduisent à l'électrode négative en ammoniaque NH₄OH. L'ammoniaque migre à travers le séparateur en sens inverse et s'oxyde à l'électrode positive en nitrate (ou en nitrite), qui migre à travers le séparateur vers l'électrode négative et ainsi de suite.

Pour remédier à ce problème, des solutions techniques existent telles que des séparateurs greffés par de l'acide acrylique. De tels séparateurs sont capables de piéger l'ammoniaque. A cet égard, on peut se référer à l'article « Separators for nickel metal hydride and nickel cadmium batteries designed to reduced self-discharge rates » paru dans Journal of Power Sources 2004, 137(2), 317-321 qui décrit l'application sur un séparateur constitué de fibres de polyoléfine, d'une poudre d'un polyéthylène haute densité auquel on a greffé de l'acide acrylique.

Une autre solution consiste à sulfoner le séparateur, c'est-à-dire substituer un atome d'hydrogène par un groupe SO₃H. La sulfonation permet de réduire l'autodécharge de l'accumulateur en piégeant l'ammoniaque. Elle confère également à la surface du séparateur un caractère hydrophile nécessaire à une bonne mouillabilité du séparateur. Les documents JP 01-132044, EP-A-1 047 140, JP 2001-283818, US 2002/0160260 et JP 2004-031293 décrivent un séparateur en polyoléfine dont la surface est sulfonée. Le procédé de sulfonation consiste à immerger le séparateur dans de l'acide sulfurique fumant. Il est nécessaire de laisser imprégner le séparateur dans le bain d'acide sulfurique pendant un temps suffisamment long pour permettre à la sulfonation de se produire. L'étape de sulfonation est en général suivie d'une immersion du séparateur sulfoné dans des bains de moins en moins concentrés en acide puis d'un lavage à l'eau. La sulfonation produit des déchets d'acide sulfurique qu'il est nécessaire de traiter. Cette solution technique n'est donc pas simple à mettre en oeuvre.

Par ailleurs, dans certains accumulateurs NiMH, la capacité du séparateur à piéger les composés azotés peut être inférieure à la quantité de composés azotés présents dans l'électrolyte. Dans ces conditions, l'autodécharge de ces accumulateurs sera mauvaise. De plus, les procédés tels que le greffage d'acide acrylique ou la sulfonation conduisent à des variations locales de la capacité du séparateur à piéger les composés azotés, générant ainsi une variabilité de l'autodécharge de l'accumulateur lors de la fabrication de celui-ci à l'échelle industrielle.

Une autre solution technique pour réduire l'autodécharge consiste à ajouter dans l'accumulateur un additif ayant la propriété de piéger l'ammoniaque. Le document JP 2005-216676 décrit l'addition de particules d'un polymère possédant un monomère de carbodiimide de formule -R-N=C=N-, dans laquelle R est un groupe organique. Les particules d'additif peuvent être déposées sur le séparateur ou dispersées dans l'électrolyte. L'additif réduit l'autodécharge par piégeage de l'ammoniaque.

Le document JP 2001-023683 décrit l'addition dans l'électrolyte de l'accumulateur d'un produit polysulfoné d'un composé phénolique.

Le document JP-A-11 246923 divulgue une composition comprenant:
- un alliage hydrurable de formule AB₅ , comme par exemple LaNi₅; et
- un alliage comprenant du Mg, comme par exemple le Mg₂Ni.

On recherche donc un accumulateur nickel métal hydrure possédant une capacité élevée de piégeage des composés azotés. On recherche également un moyen de pallier le problème de la dispersion de la capacité des séparateurs à piéger les composés azotés au cours de la fabrication d'un accumulateur NiMH à l'échelle industrielle.

Aucun des documents ci-dessus n'enseigne ni ne décrit l'accumulateur selon l'invention.

### RESUME DE L'INVENTION

L'invention a pour objet une composition comprenant :
a) un alliage hydrurable de formule ABₓ où :
   A est un élément choisi parmi La, Ce, Nd, Pr et Mg, ou un mélange de ceux-ci ;
   B est un élément choisi parmi Ni, Mn, Fe, Al, Co, Cu, Zr, Sn, ou un mélange de ceux-ci ;
   x est de 3 à 6 ;
b) un composé au magnésium dans une proportion telle que sa masse soit supérieure à 0,1 % et inférieure ou égale à 5% de la masse de l'alliage hydrurable.

Cette composition peut être utilisée comme matière active d'une électrode négative d'un accumulateur nickel-métal hydrure.

Selon un mode de réalisation, l'alliage est choisi dans le groupe comprenant les alliages du type AB₅, A₅B₁₉ et A₂B₇.

Selon un mode de réalisation, la masse du composé au magnésium est de 1 à 4 % de la masse de l'alliage hydrurable, de préférence de 2 à 4 % de la masse de l'alliage hydrurable.

Selon un mode de réalisation, le composé au magnésium est choisi dans le groupe comprenant Mg(OH)₂, MgSO₄, MgO et Mg₃(PO₄)₂.

Selon un mode de réalisation, la composition contient un composé d'yttrium.

De préférence, la masse d'yttrium représente de 0,1 % à 2% de la masse d'alliage hydrurable, de préférence encore de 0,2% à 1% de la masse d'alliage hydrurable.

L'invention a également pour objet une électrode comprenant la composition selon l'invention.

L'invention a également pour objet un accumulateur comprenant au moins une électrode selon l'invention. Un tel accumulateur présente une auto-décharge réduite.

L'invention a encore pour objet un procédé de fabrication de l'électrode selon l'invention. Ce procédé de fabrication comprend les étapes consistant à :
a) fournir un alliage hydrurable de formule ABx, où :
   A est un élément choisi parmi La, Ce, Nd, Pr et Mg, ou un mélange de ceux-ci ;
   B est un élément choisi parmi Ni, Mn, Fe, Al, Co, Cu, Zr, Sn, ou un mélange de ceux-ci ;
   x est de 3 à 6 ;
b) fournir un composé au magnésium dans une proportion telle que sa masse soit supérieure à 0,1 % et inférieure ou égale à 5% de la masse de l'alliage hydrurable ;
c) préparer un mélange aqueux comprenant l'alliage et le composé au magnésium pour former une pâte ;
d) déposer la pâte obtenue à l'étape c) sur un support.

### EXPOSE DETAILLE DES MODES DE REALISATION DE L'INVENTION

L'invention propose une composition de matière active d'électrode négative pour accumulateur alcalin nickel métal hydrure, comprenant :
a) un alliage hydrurable de formule ABₓ où :
   A est un élément choisi parmi La, Ce, Nd, Pr et Mg, ou un mélange de ceux-ci ;
   B est un élément choisi parmi Ni, Mn, Fe, Al, Co, Cu, Zr, Sn, ou un mélange de ceux-ci ;
   x est de 3 à 6 ;
b) un composé au magnésium dans une proportion telle que sa masse soit supérieure à 0,1 % et inférieure ou égale à 5% de la masse de l'alliage hydrurable.

De préférence, l'alliage est choisi dans le groupe comprenant les alliages du type AB₅, A₅B₁₉ et A₂B₇.

Le composé au magnésium peut être choisi parmi Mg(OH)₂, MgSO₄, MgO et Mg₃(PO₄)₂.

Dans un mode de réalisation préféré, la masse du composé au magnésium est de 1 à 4 % de la masse de l'alliage hydrurable, de préférence de 2 à 4 % de la masse de l'alliage hydrurable.

Sans vouloir être lié par la théorie, la Demanderesse est d'avis que le mélange de l'alliage avec un composé au magnésium a pour effet de piéger une partie de l'azote présent dans l'accumulateur. Lorsque la quantité de ce composé au magnésium devient trop importante dans l'électrode négative, la quantité de matière n'absorbant pas l'hydrogène croît ce qui conduit à une diminution de l'excédent négatif et donc à une durée de vie écourtée de l'accumulateur. Ainsi, la proportion massique du composé au magnésium dans l'électrode négative doit être limitée à 5% de la masse d'alliage hydrurable.

Le procédé d'ajout du composé au magnésium à la matière active durant la fabrication de l'anode est simple à mettre en oeuvre industriellement et consiste à ajouter ledit produit lors de la préparation de la pâte destinée à être enduite sur l'électrode.

Selon un mode préféré de réalisation, on mélange également à la composition de l'invention un composé à base d'yttrium. Le composé à base d'yttrium est choisi dans une liste non exhaustive comprenant un oxyde à base d'yttrium tel que Y₂O₃, un hydroxyde à base d'yttrium tel que Y(OH)₃ ou un sel à base d'yttrium. De préférence, le composé à base d'yttrium est l'oxyde d'yttrium Y₂O₃. Le composé à base d'yttrium est mélangé à l'alliage en une proportion telle que la masse d'yttrium représente de 0,1 % à 2 % de la masse de l'alliage, de préférence de 0,2 % à 1 % de la masse d'alliage. Le mélange de la composition de l'invention avec un composé d'yttrium a pour effet d'augmenter la durée de vie en cyclage de l'électrode négative.

L'invention concerne aussi une anode comprenant ladite composition de matière active. L'anode est fabriquée en empâtant un support avec une pâte constituée d'un mélange aqueux de la composition de matière active selon l'invention et d'additifs.

Le support peut être une mousse de nickel, un feuillard perforé plan ou tridimensionnel en nickel ou en acier nickelé.

Les additifs sont destinés à faciliter la mise en oeuvre ou les performances de l'anode. Ils peuvent être des épaississants tels que la carboxyméthylcellulose (CMC), l'hydroxypropylméthylcellulose (HPMC), le poly(acide acrylique) (PAAc), le poly(oxyde d'éthylène) (PEO), la gomme xanthane. Ils peuvent aussi être des liants tels que les copolymères de butadiène-styrène (SBR), le polystyrène acrylate (PSA), le polytétrafluoroéthylène (PTFE). Ils peuvent être aussi des fibres polymères, tels que polyamide, polypropylène, polyéthylène, etc. pour améliorer les propriétés mécaniques de l'électrode. Ils peuvent aussi être des agents conducteurs tels que de la poudre de nickel, de la poudre ou des fibres de carbone, des nanotubes.

Avantageusement, l'anode est recouverte d'une couche de surface destinée à améliorer la décharge à régime élevé et/ou la recombinaison de l'oxygène en fin de charge.

L'invention concerne aussi un accumulateur à électrolyte alcalin, par exemple nickel métal hydrure, comprenant au moins une anode selon l'invention. Cet accumulateur comprend typiquement ladite au moins une anode, au moins une cathode au nickel, au moins un séparateur et un électrolyte alcalin.

La cathode est constituée de la masse active cathodique déposée sur un support qui peut être un support fritté, une mousse de nickel, un feuillard perforé plan ou tridimensionnel en nickel ou en acier nickelé.

La masse active cathodique comprend la matière active cathodique et des additifs destinés à faciliter sa mise en oeuvre ou ses performances. La matière active cathodique est un hydroxyde de nickel Ni(OH)₂ qui peut être partiellement substitué par Co, Mg et Zn. Cet hydroxyde peut être partiellement oxydé et peut être revêtu d'une couche de surface à base de composés du cobalt.

Parmi les additifs, on peut citer, sans que cette liste soit exhaustive, la carboxyméthylcellulose (CMC), l'hydroxypropylméthylcellulose (HPMC), l'hydroxypropylcellulose (HPC), l'hydroxyéthylcellulose (HEC), la gomme xanthane, le poly(acide acrylique) (PAAc), le polystyrène maléique anhydride (SMA), les copolymères de butadiène-styrène (SBR) éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), le polystyrène acrylate (PSA), le polytétrafluoroéthylène (PTFE), un copolymère fluoré d'éthylène et de propylène (FEP), le polyhexafluoropropylène (PPHF), l'éthylvinylacétate (EVA), l'oxyde de zinc ZnO, des fibres (Ni, C, polymères), des poudres de composés à base de cobalt tels que Co, Co(OH)₂, CoO, LiₓCoO₂, HₓCoO₂, NaₓCoO₂, CoₓO₄.

Le séparateur est généralement composé de fibres en polyoléfine (par ex. polypropylène) ou polyamide non-tissé.

L'électrolyte est une solution aqueuse alcaline concentrée comprenant au moins un hydroxyde (KOH, NaOH, LiOH), en une concentration généralement de l'ordre de plusieurs fois la normalité.

De façon classique on prépare les pâtes pour électrodes, on fabrique les électrodes, puis on superpose au moins une cathode, un séparateur et une anode afin de constituer le faisceau électrochimique. On introduit le faisceau électrochimique dans un godet conteneur et on l'imprègne avec un électrolyte alcalin aqueux. On ferme ensuite l'accumulateur.

L'invention concerne tout format d'accumulateurs: format prismatique (électrodes planes) ou format cylindrique (électrodes spiralées ou concentriques). L'accumulateur selon l'invention peut être du type ouvert (ouvert ou semi-ouvert) ou du type étanche.

### EXEMPLES

Des éléments étanches de format AA de capacité 1100 mAh ont été réalisés avec un alliage de type AB₅. Le tableau 1 résume les caractéristiques des électrodes négatives de ces éléments.

**Tableau 1**

| série | A | B | C | D | E | F |
|---|---|---|---|---|---|---|
| Nature du composé au magnésium | | Mg(OH)₂ | | | | MgSO₄ |
| masse de ce composé/masse alliage | 0% | 0,1% | 2,7% | 5% | 7% | 2,7% |

Les électrodes négatives ont été réalisées comme suit. Une pâte constituée d'un mélange aqueux de poudre d'alliage (>98 %), de CMC (épaississant, 0,3%), de SBR (liant, 1%), de carbone (conducteur, 0,5%), est empâtée dans une mousse de nickel. Toutes les électrodes négatives sont découpées aux mêmes dimensions. L'yttrium a été ajouté sous forme d'oxyde d'yttrium à raison de 0,4 % massique par rapport à la masse d'alliage hydrurable. Le magnésium est ajouté sous forme d'hydroxyde Mg(OH)₂ ou MgSO₄.

L'électrode positive est une électrode mousse standard contenant un hydroxyde à base de nickel et un composé conducteur Co(OH)₂.

Le faisceau constitué de l'électrode positive, du séparateur non tissé polyoléfine et de l'électrode négative, est spiralé et introduit dans le godet. Les éléments de connectique sont ensuite montés. Le godet est rempli d'électrolyte 8N KOH (6,5N), NaOH (1N), LiOH (0,5N).

Les éléments subissent tout d'abord 3 cycles (charge 16h 110mA, repos 1h, décharge 220mA, arrêt 0,9V). Puis la capacité déchargée à C/5, arrêt 0,9V, après une charge de 16h à 110mA et 7 jours de repos à 40°C est mesurée. Cette mesure permet de calculer un pourcentage d'autodécharge égal à SD=(D₀-D₇ⱼₒᵤᵣₛ)/D₀×100 où D₇ⱼₒᵤᵣₛ représente la capacité déchargée après repos de 7 jours à 40°C et D₀ la capacité déchargée sans cette période de repos. Les pourcentages d'autodécharge initiale sont rassemblés dans le tableau 2.

**Tableau 2**

| série | A | B | C | D | E | F |
|---|---|---|---|---|---|---|
| SD (%) | 26% | 26% | 22% | 20% | 19% | 23% |
| % capacité résiduelle après 6 mois de surcharge à 70°C à C/20 | 78% | 79% | 77% | 75% | 32% | 77% |

Ces éléments de format AA subissent ensuite une surcharge à 70°C à C/20 pendant 6 mois. Au bout des 6 mois de surcharge à 70°C, le cycle suivant de référence est de nouveau mesuré (charge 16h 110mA, repos 1h, décharge 220mA, arrêt 0,9V) et comparé à la valeur initialement mesurée (tableau 2).

L'accumulateur de référence est l'accumulateur A qui ne contient pas le composé au magnésium. D'après les résultats présentés dans le tableau 2, l'utilisation de Mg(OH)₂ dans la pâte de l'électrode négative hydrure apporte un impact bénéfique sur l'autodécharge initiale puisque l'autodécharge diminue de la valeur de référence de 26% à une valeur de 19% pour une quantité de magnésium de 7%. Une teneur de l'ordre de 0,1% du composé au magnésium n'est pas suffisante pour piéger l'azote car l'accumulateur B présente une valeur d'autodécharge de 26%, identique à la valeur de référence. Un pourcentage trop élevé de composé au magnésium, c'est-à-dire supérieur à 5%, induit une plus faible durée de vie de l'accumulateur.

L'accumulateur selon l'invention peut être placé dans un état prolongé de surcharge (plusieurs mois) à haute température sans subir de perte significative de capacité résiduelle.

## Revendications

1. Composition comprenant :
a) un alliage hydrurable de formule ABₓ où :
A est un élément choisi parmi La, Ce, Nd, Pr et Mg, ou un mélange de ceux-ci ;
B est un élément choisi parmi Ni, Mn, Fe, Al, Co, Cu, Zr, Sn, ou un mélange de ceux-ci ;
x est de 3 à 6 ;
b) un composé au magnésium dans une proportion telle que sa masse soit supérieure à 0,1 % et inférieure ou égale à 5% de la masse de l'alliage hydrurable.

2. Composition selon la revendication 1, dans laquelle l'alliage est choisi dans le groupe comprenant les alliages du type AB₅, A₅B₁₉ et A₂B₇.

3. Composition selon l'une des revendications précédentes, dans laquelle la masse du composé au magnésium est de 1 à 4% de la masse de l'alliage hydrurable, de préférence de 2 à 4 % de la masse de l'alliage hydrurable.

4. Composition selon l'une des revendications précédentes, dans laquelle le composé au magnésium est choisi dans le groupe comprenant Mg(OH)₂, MgSO₄, MgO et Mg₃(PO₄)₂.

5. Composition selon l'une des revendications précédentes, contenant un composé d'yttrium.

6. Composition selon la revendication 5, dans laquelle la masse d'yttrium représente de 0,1% à 2% de la masse d'alliage hydrurable, de préférence de 0,2% à 1% de la masse d'alliage hydrurable.

7. Electrode comprenant la composition selon l'une des revendications précédentes.

8. Accumulateur comprenant au moins une électrode selon la revendication 7.

9. Procédé de fabrication d'une électrode selon la revendication 7, comprenant les étapes consistant à :
a) fournir un alliage hydrurable de formule ABₓ, où :
A est un élément choisi parmi La, Ce, Nd, Pr et Mg, ou un mélange de ceux-ci ;
B est un élément choisi parmi Ni, Mn, Fe, Al, Co, Cu, Zr, Sn, ou un mélange de ceux-ci ;
x est de 3 à 6 ;
b) fournir un composé au magnésium dans une proportion telle que sa masse soit supérieure à 0,1 % et inférieure ou égale à 5% de la masse de l'alliage hydrurable ;
c) préparer un mélange aqueux comprenant l'alliage et le composé au magnésium pour former une pâte ;
d) déposer la pâte obtenue à l'étape c) sur un support.

## Claims

1. Composition comprising:
a) a hydrogen-fixing alloy of formula ABₓ where:
A is an element chosen from La, Ce, Nd, Pr and Mg, or a mixture of these;
B is an element chosen from Ni, Mn, Fe, Al, Co, Cu, Zr, Sn, or a mixture of these;
x is from 3 to 6;
b) a magnesium compound in such a proportion that its mass is greater than 0.1 % and less than or equal to 5% of the mass of the hydrogen-fixing alloy.

2. Composition according to claim 1, in which the alloy is chosen from the group comprising alloys of the type AB₅, A₅B₁₉ and A₂B₇.

3. Composition according to one of the preceding claims, in which the mass of the magnesium compound is from 1 to 4 % of the mass of the hydrogen-fixing alloy, preferably from 2 to 4 % of the mass of the hydrogen-fixing alloy.

4. Composition according to one of the preceding claims, in which the magnesium compound is chosen from the group comprising Mg(OH)₂, MgSO₄, MgO and Mg₃(PO₄)₂.

5. Composition according to one of the preceding claims, containing an yttrium compound.

6. Composition according to claim 5, in which the yttrium mass represents from 0.1 % to 2% of the mass of the hydrogen-fixing alloy, preferably more than 0.2% to 1% of the mass of the hydrogen-fixing alloy.

7. Electrode containing the composition according to one of the preceding claims.

8. Accumulator containing at least one electrode according to claim 7.

9. Method of producing an electrode according to claim 7, comprising the stages:
a) providing a hydrogen-fixing alloy of formula ABₓ, where:
- A is an element chosen from La, Ce, Nd, Pr and Mg, or a mixture of these;
- B is an element chosen from Ni, Mn, Fe, Al, Co, Cu, Zr, Sn, or a mixture of these;
x is from 3 to 6;
b) providing a magnesium compound in such a proportion that its mass is greater than 0.1 % and less than or equal to 5% of the mass of the hydrogen-fixing alloy;
c) preparing an aqueous mixture comprising the alloy and compound with the magnesium in order to form a paste;
d) depositing the paste obtained in stage c) on a support.

## Patentansprüche

1. Zusammensetzung, umfassend:
a) eine hydrierbare Legierung der Formel ABₓ, wobei:
A entweder ein Element zwischen La, Ce, Nd, Pr und Mg ist, oder ein Gemisch aus diesen;
B entweder ein Element zwischen Ni, Mn, Fe, Al Co, Cu, Zr, Sn ist, oder ein Gemisch aus diesen;
x Werte von 3 bis 6 annimmt;
b) eine Magnesiumverbindung in einem Anteil, welcher derart ist, dass deren Masse mehr als 0,1 % und höchstens 5 % der Masse der hydrierbaren Legierung beträgt.

2. Zusammensetzung nach Anspruch 1, wobei die Legierung aus der Gruppe gewählt ist, die Legierungen des Typs AB₅, A₅B₁₉ und A₂B₇ umfasst.

3. Zusammensetzung gemäß einem der vorhergehenden Ansprüche, wobei die Masse der Magnesiumverbindung 1 bis 4 % der Masse der hydrierbaren Legierung, vorzugsweise 2 bis 4 % der Masse der hydrierbaren Legierung, ausmacht.

4. Zusammensetzung gemäß einem der vorhergehenden Ansprüche, wobei die Magnesiumverbindung aus der Gruppe gewählt ist, die Mg (OH)₂, MgSO₄, MgO und Mg₃(PO₄)₂ umfasst.

5. Zusammensetzung gemäß einem der vorhergehenden Ansprüche, eine Yttriumverbindung enthaltend.

6. Zusammensetzung nach Anspruch 5, wobei die Yttriummasse 0,1 % bis 2 % der Masse der hydrierbaren Legierung, vorzugsweise 0,2 % bis 1 % der hydrierbaren Legierung, ausmacht.

7. Elektrode, die Zusammensetzung gemäß einem der vorhergehenden Ansprüche umfassend.

8. Akkumulator, mindestens eine Elektrode nach Anspruch 7 umfassend.

9. Verfahren zur Herstellung einer Elektrode nach Anspruch 7, umfassend die Schritte bestehend aus:
a) dem Bereitstellen einer hydrierbaren Legierung der Formel ABₓ, wobei:
A entweder ein Element zwischen La, Ce, Nd, Pr und Mg ist, oder ein Gemisch aus diesen;
B entweder ein Element zwischen Ni, Mn, Fe, Al Co, Cu, Zr, Sn ist, oder ein Gemisch aus diesen;
x Werte von 3 bis 6 annimmt;
b) dem Bereitstellen einer Magnesiumverbindung in einem Anteil, welcher derart ist, dass deren Masse mehr als 0,1 % und höchstens 5 % der Masse der hydrierbaren Legierung beträgt.
c) dem Herstellen der wässrigen Mischung, welche die Legierung und die Magnesiumverbindung umfasst, um eine Paste zu bilden;
d) dem Aufbringen der Paste, die in Schritt c) erhalten wird, auf einen Träger.
